# EUROPEAN PATENT SPECIFICATION

(11) **EP 4 310 967 B1**
(45) Date of publication and mention of the grant of the patent: **18.03.2026**
(21) Application number: 22846210.7
(22) Date of filing: 20.07.2022
(51) Int. Cl.: H01M 50/403, H01M 50/417, H01M 50/434, H01M 50/457, H01M 10/04, H01M 50/491, H01M 10/0587, H01M 50/451, H01M 50/489

(54) **JELLY-ROLL TYPE ELECTRODE ASSEMBLY AND METHOD FOR MANUFACTURING SAME**
JELLY-ROLL-ELEKTRODENANORDNUNG UND VERFAHREN ZUR HERSTELLUNG DAVON
ENSEMBLE ÉLECTRODE DE TYPE ROULÉ ET SON PROCÉDÉ DE FABRICATION

(30) Priority: 20.07.2021 KR 20210094709; 19.07.2022 KR 20220088832
(43) Date of publication of application: 24.01.2024
(73) Proprietor: LG ENERGY SOLUTION, LTD., Seoul 07335 (KR)
(72) Inventor: KIM, Soo Jung, Daejeon 34122 (KR); RYU, Duk Hyun, Daejeon 34122 (KR)
(74) Representative: Goddar, Heinz J.
(86) International application number: PCT/KR2022/010590
(87) International publication number: WO 2023/003340

(56) References cited:
- EP-A1- 2 634 836
- EP-B1- 2 206 180
- WO-A1-2011/013300
- JP-A- 2001 176 540
- JP-A- 2019 021 805
- JP-A- 2019 021 805
- KR-A- 20090 100 207
- KR-B1- 100 824 851
- KR-B1- 101 310 541
- US-A1- 2008 102 361

## Description

### [TECHNICAL FIELD]

### Cross Citation with Related Application(s)

This application claims the benefit of Korean Patent Application No. 10-2021-0094709 filed on July 20, 2021 and Korean Patent Application No. 10-2022-0088832 filed on July 19, 2022 in the Korean Intellectual Property Office.

The present disclosure relates to a jelly-roll type electrode assembly and a method of manufacturing the same, and more particularly, to a jelly-roll type electrode assembly which has improved safety and high process yield and a method of manufacturing the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, being freely charged and discharged, and having very low self-discharge rate and high energy density.

The secondary battery may be classified based on the shape of a battery case into a cylindrical battery having an electrode assembly mounted in a cylindrical metal can, a prismatic battery having an electrode assembly mounted in a prismatic metal can, and a pouch type battery having an electrode assembly mounted in a pouch-shaped case made of a laminated aluminum sheet.

The secondary battery may be classified based on the structure of an electrode assembly having a structure in which a cathode and an anode are stacked with a separator being interposed between the cathode and the anode. Typically, there may be mentioned a jelly-roll (wound) type structure in which a long sheet type cathode and a long sheet type anode are wound with a separator being interposed between the cathode and the anode, a stacked (laminated) type structure in which pluralities of cathodes and anodes, cut into predetermined unit sizes, are sequentially stacked with separators being interposed between the cathodes and the anodes, or the like. In recent years, in order to solve problems caused by the jelly-roll type electrode assembly and the stacked type electrode assembly, there has been developed a stacked/folded type electrode assembly, which is a combination of the jelly-roll type electrode assembly and the stacked type electrode assembly. Among them, the jelly-roll type electrode assembly has the advantages of being the easiest to manufacture and having a high energy density per weight. JP2019021805A and EP 2206180B1 disclose a jelly-roll type electrode assembly.

EP2206180 B1 also discloses a method of manufacturing a jelly-roll type electrode assembly.

Separator is a film material that isolates the two electrodes (cathode/anode) in the secondary battery to interrupt electrical short circuits caused by physical contact, and has a function of having ion conductivity by providing a path through which ions can move between two electrodes through electrolyte supported in micropores. In the case of secondary batteries for electric vehicles, they are required to have heat resistance characteristics that ensure battery safety even in an environment where they are exposed to heat of about 150°C, unlike conventional small-sized electronic devices. Thus, in recent years, polypropylene (PP), which has excellent thermal properties, has been used as a material for separators, and a ceramic-coated SRS separator (safety reinforced separator) that improves heat resistance by coating ceramic particles and a polymer binder on one surface or both surfaces of the separator is applied to a secondary battery.

On the other hand, in applying a double-sided SRS separator to a jelly-roll type electrode assembly, there is a problem that the process yield is slightly lowered by a surface roughness value of a SRS separator and a mandrel, or a frictional force between the SRS separator and the mandrel. Specifically, when a double-sided SRS separator is applied, a slip condition or a tail out condition may appear during removal of the mandrel, depending on the friction force of the coating layer formed on the separator or the difference between the friction force between the core and the separator, which makes it difficult to secure the processability of the jelly-roll type electrode assembly.

Therefore, in order to solve the problems of the prior art, there is a need to develop a jelly-roll type electrode assembly and a method for manufacturing the same that have considered the surface roughness values of the SRS separator and the mandrel.

### [DETAILED DESCRIPTION OF THE INVENTION]

### [Technical Problem]

It is an object of the present disclosure to provide a jelly-roll type electrode assembly which has improved safety and high process yield and a method of manufacturing the same.

### [Technical Solution]

According to an aspect of the present disclosure, there is provided a jelly-roll type electrode assembly in which a sheet-like laminate comprising an electrode and a separator is wound, wherein the separator includes a double-sided coating layer, wherein the coating layer includes a mixture of a first alumina and a second alumina, and wherein the separator has a surface roughness (Ra) of 500 nm to 1 µm, and a particle diameter of the first alumina is smaller than a particle diameter of the second alumina.

The second alumina may be contained in an amount of 16 to 40 parts by weight based on 100 parts by weight of the mixture.

The first alumina may be contained in an amount of 60 to 84 parts by weight based on 100 parts by weight of the mixture.

The first alumina may have a particle diameter of 20 to 50 nm.

The second alumina may have a particle diameter of 300 to 500 nm.

The electrode assembly may be a double-sided SRS laminate in which a separator, a cathode, a separator and an anode are stacked in this order.

The jelly-roll type electrode assembly may have a core length of about 10 cm to 12 cm and a radius of about 4 cm to 5 cm.

According to another aspect of the present disclosure, there is provided a method of manufacturing a jelly-roll type electrode assembly, the method comprising the steps of: providing a separator containing a double-sided coating layer, calculating a difference value between a surface roughness of the separator and a surface roughness of a mandrel, adjusting the surface roughness of the mandrel using a first process if the difference value between the surface roughness of the separator and the surface roughness of the mandrel is less than a first value, adjusting the surface roughness of the mandrel using a second process if the difference value between the surface roughness of the separator and the surface roughness of the mandrel is equal to or larger than the first value, and winding a sheet-like laminate including an electrode and the separator using the mandrel whose surface roughness has been adjusted, wherein the coating layer includes a mixture of a first alumina and a second alumina, and wherein the separator has a surface roughness (Ra) of 500 nm to 1 µm, and the particle diameter of the first alumina is smaller than the particle diameter of the second alumina.

The second alumina may be contained in an amount of 16 to 40 parts by weight based on 100 parts by weight of the mixture.

The first alumina may be contained in an amount of 60 to 84 parts by weight based on 100 parts by weight of the mixture.

The first value (Rmax) may be between 0.05s and 0.15s.

The sheet-like laminate is wound by a rod-shaped mandrel, the mandrel includes a first part and a second part that are separated around a rotation axis, one end of the sheet-like laminate is fixed by being inserted into a slit between the first part and the second part, and the size of the slit is larger than 0.8 mm.

The sheet-like laminate is wound by a rod-shaped mandrel, the surface roughness of the mandrel is less than or equal to the second value, and the second value (Rmax) is 0.15 s to 0.25 s.

When the second process is used in the step of adjusting the surface roughness of the mandrel, the step of calculating the difference value between the surface roughness of the separator and the surface roughness of the mandrel may be performed again.

When the difference value of the surface roughness calculated in the step of calculating the difference value between the surface roughness of the separator and the surface roughness of the mandrel that is performed again is equal to or larger than a first value, the step of adjusting the surface roughness of the mandrel using a second process may be performed.

When the difference value of the surface roughness calculated in the step of calculating the difference value between the surface roughness of the separator and the surface roughness of the mandrel that is performed again is less than or equal to a first value, the step of adjusting the surface roughness of the mandrel using a first process is performed, and the step of winding a sheet-like laminate including the electrode and the separator using the mandrel whose surface roughness has been adjusted may be performed.

According to yet another aspect of the present disclosure, there is provided a battery cell comprising the above-mentioned jelly-roll type electrode assembly.

### [Advantageous Effects]

According to embodiments, a jelly-roll type electrode assembly of the present disclosure and a method of manufacturing the same can improve heat resistance and safety by including a double-sided SRS separator, and improve the process yield by adjusting the surface roughness of the SRS separator and the mandrel.

### [BRIEF DESCRIPTION OF THE DRAWINGS]

Fig. 1 is a perspective view showing a jelly-roll type electrode assembly according to an embodiment of the present disclosure;
Fig. 2 is a flowchart of a method for manufacturing a jelly-roll type electrode assembly according to an embodiment of the present disclosure;
Fig. 3 is a side view of a mandrel used in a jelly-roll type electrode assembly manufacturing method according to an embodiment of the present disclosure; and
Fig. 4 is a cross-sectional view of a mandrel used in a jelly-roll type electrode assembly manufacturing method according to an embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them.

Portions that are irrelevant to the description will be omitted to clearly describe the present disclosure, and like reference numerals designate like elements throughout the description.

Further, the size and thickness of each element shown in the drawing are arbitrarily enlarged or reduced for convenience of description, and thus, it would be obvious that the contents of the present disclosure is not limited to those illustrated in the drawings. In the drawings, the thickness of layers, regions, etc. are exaggerated for clarity. Further, in the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similar to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Below, a jelly-roll type electrode assembly according to an embodiment of the present disclosure will be described.

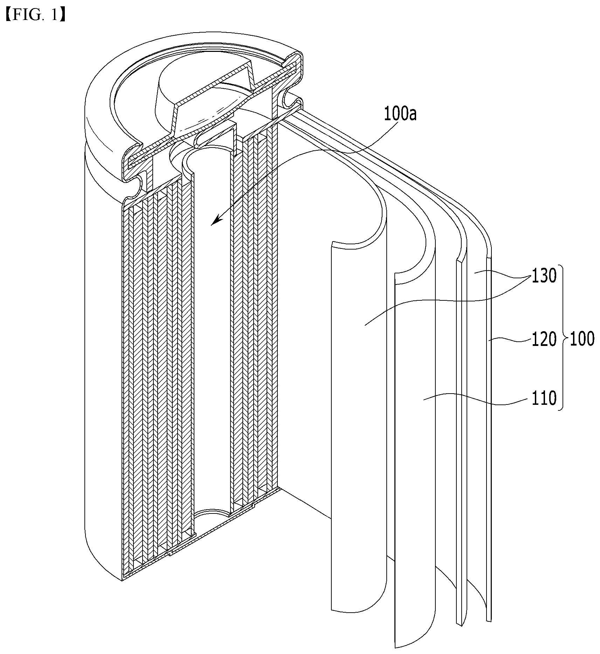

Fig. 1 is a perspective view showing a jelly-roll type electrode assembly according to an embodiment of the present disclosure.

Referring to Fig. 1, the j elly-roll type electrode assembly 100 of the present embodiment may include a cathode 110, an anode 120, and a separator 130 interposed between the cathode 110 and the anode 120. In Fig. 1, the jelly-roll type electrode assembly 100 is shown in which a separator 130, a cathode 110, a separator 130, and an anode 120 are stacked in that order and wound so that the cathode 110 is located inside the jelly-roll-type electrode assembly 100 is shown. However, that arrangement is not required, and instead the separator 130, the anode 120, the separator 130, and the cathode 110 can also be stacked in that order so that the anode 120 is located inside. In addition, the cathode 110, the separator 130, the anode 120, and the separator 130 can be stacked in that order, or alternatively the anode 120, the separator 130, the cathode 110, and the separator 130 can be stacked in that order. In this way, the electrodes 110 and 120 and the separator 130 are alternately stacked to form a sheet-like laminate, wherein the sheet-like laminate can be wound by a long rod-shaped mandrel.

The cathode 110 and the anode 120 may be collectively referred to as electrodes 110 and 120. The electrodes 110 and 120 may be formed by coating a slurry including an electrode active material on a current collector. Here, the electrode slurry may typically include an electrode active material, a conductive material, a binder, and a solvent, but is not limited thereto. Further, the current collector herein may be stainless steel, aluminum, copper, nickel, titanium, baked carbon, and the like, and may be provided in various forms, such as a film, a sheet, a foil, a net, a porous body, a foaming body, a nonwoven fabric structure. Examples of the current collector used for the cathode 110 may include aluminum or an alloy thereof, and examples of the current collector used for the anode 120 may include copper, nickel, stainless steel, or an alloy of any one of them.

The separator 130 may separate the cathode 110 and the anode 120, and may provide a moving passage of ions that move between the cathode 110 and the anode 120. The separator 130 should satisfy physical properties such as minimizing its thickness in order to lower electrical resistance and maximizing porosity and pore size in order for the separator 130 to have physical properties suitable for a secondary battery, as a main component that determines the performance of the secondary battery. In addition, the separator 130 should also satisfy electrochemical properties such as wettability with an electrolyte.

Meanwhile, as the secondary battery is used in medium and large-sized devices, the temperature inside the battery cell can rise to the level of 150°C or more, which can cause a problem in that the separator 130 can melt and cause an internal short circuit in the battery cell. Therefore, the separator 130 used in the secondary battery must satisfy heat resistance in addition to physical and electrochemical properties, and therefore, an attempt has been made to change the material of the separator 130 to polyolefin, polyethylene, polypropylene, or a composite body thereof. Recently, in addition to simply changing the material, a method of manufacturing the separator 130 has been utilized in which one surface or both surfaces of a porous substrate such as polyolefin, polyethylene, polypropylene, etc. is coated with a coating material made of a ceramic material. Such a separator 130 may be referred to as an SRS or SRS separator, and details of the SRS separator can be described with reference to the known literature.

A coating layer is formed by applying a coating material to both surfaces of the separator 130, and the heat resistance and safety of the separator 130 can be improved by the coating layer. For example, a coating material containing alumina (Al₃O₂) and a binder can is coated onto one both surfaces of the distal end of the separator 130. When alumina having strong heat resistance is coated onto the distal end, the separator 130 physically interrupts a continuous contact between the cathode and the anode even in a high temperature situation inside the battery cell such as thermal runaway, thereby preventing an internal short circuit of the battery cell.

The separator 130 may be provided as a double-sided SRS separator. A coating material can be coated onto both surfaces of the distal end of the separator 130 facing the electrodes 110 and 120 to thereby form a coating layer. When the coating layer is formed onto both surfaces of the separator 130, either one surface or the other surface of the separator 130 is in contact with the electrodes 110 and 120, so that the separator 130 can be freely arranged within the process. In addition, the simplification of the process and reduction of the process time can be achieved accordingly.

The coating layer of the separator 130 may include ceramic particles and a polymer binder. Examples of the ceramic particles include alumina, and the characteristics of the separator 130 may vary depending on the diameter of the alumina. For example, as the diameter of the alumina decreases, the surface area of the particles increases, and a relatively large number of particles can be in contact the distal end of the separator 130, whereby the adhesion of the particles is improved, and deformation of the separator 130 can be suppressed. Further, even when the coating material is repeatedly applied onto the distal end of the separator 130, the thickness of the coating layer may become thin if the particle diameter is small. Therefore, the air permeability of the coating layer can be increased, and the ion conductive resistance of the separator 130 can be lowered, as compared with the case where the particle diameter is large. In order to realize the above-mentioned effects, fumed alumina having a small diameter can be used as a material of the coating material, and their diameter may be 20 to 50 nm.

The coating layer of the separator 130 is formed on both surfaces, and the surface roughness of the separator 130 can be determined by the coating layer. When the coating layer of the separator 130 is formed using fumed alumina, the surface roughness of the coating layer may become low, and accordingly, a phenomenon in which the separator 130 slides during the winding process (slip condition) may occur. In addition, if the surface roughness of the coating layer is too large, a phenomenon may occur in which the separator 130 is cut or damaged during the winding process. In addition, in the process of removing the mandrel, a phenomenon may occur in which the separator 130 is pulled out along the mandrel or the separator 130 is damaged. Therefore, the surface roughness of the separator 130 applied to the jelly-roll type electrode assembly 100 should be appropriately adjusted.

The surface roughness of the separator 130 can be adjusted by adjusting the particle size of alumina contained in the coating material. In one example, the coating material may include a mixture of fumed alumina and general alumina. Since the surface roughness of the coating layer may vary depending on the ratio of fumed alumina and general alumina contained in the mixture, a coating layer of an appropriate level required for the separator 130 can be formed by varying the ratio of the two particles. At this time, the appropriate level of surface roughness may vary depending on the difference in roughness with the mandrel, the width of the separator 130, or the size of the jelly-roll type electrode assembly. Therefore, as each condition is changed, the ratio of the appropriate mixture may vary. As will be described later, the mixture may preferably contain general alumina at a ratio of 40% or less. The mixture may preferably contain general alumina at a ratio of 16% or more.

Here, general alumina is for distinguishing from fumed alumina, and may refer to alumina particles having a larger diameter than fumed alumina. The diameter of general alumina may be 300 to 500 nm. Also, for convenience, the fumed alumina may be referred to as a first alumina, and general alumina may be referred to as a second alumina.

Next, a method of manufacturing a jelly-roll type electrode assembly according to an embodiment of the present disclosure will be described.

Since the length value of the separator 130 in the sheet-like laminate is larger than the length value of the electrodes 110 and 120, the mandrel in the winding process may be in contact with one end of the separator 130 extended long from one terminal end of the electrodes 110 and 120. Therefore, when the difference in surface roughness between the separator 130 and the mandrel is large, there may be a problem in that a part of the separator 130 is pulled out or the separator 130 is damaged when discharging a mandrel, thereby reducing the yield of the electrode assembly 100.

As described above, the yield of the jelly-roll type electrode assembly 100 may be reduced based on the difference in surface roughness between the separator 130 and the mandrel, and therefore it is necessary to adjust the surface roughness of the mandrel in addition to changing the surface roughness of the separator 130. Therefore, the manufacturing method according to the present embodiment may include a step of adjusting the surface roughness of the mandrel according to the difference between the surface roughness of the separator 130 and the surface roughness of the mandrel.

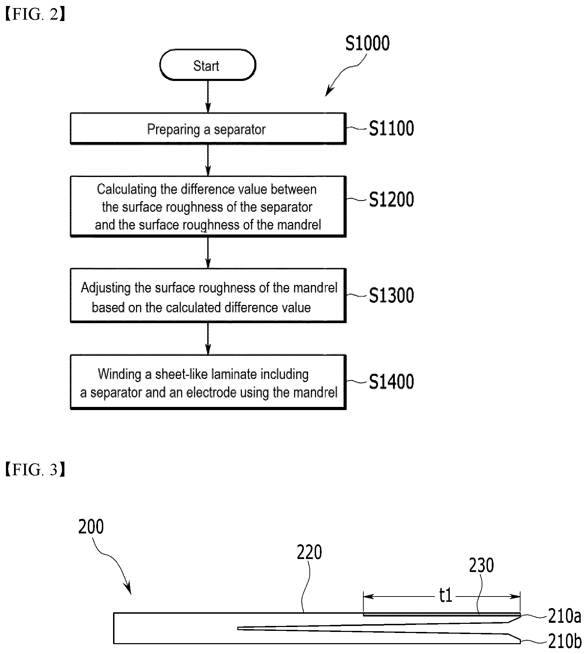

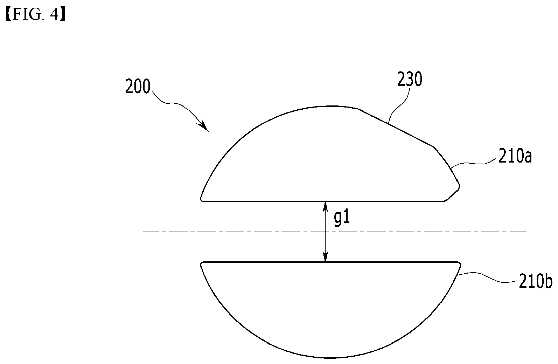

Fig. 2 is a flowchart of a method for manufacturing a jelly-roll type electrode assembly according to an embodiment of the present disclosure. Fig. 3 is a side view of a mandrel used in a jelly-roll type electrode assembly manufacturing method according to an embodiment of the present disclosure. Fig. 4 is a cross-sectional view of a mandrel used in a jelly-roll type electrode assembly manufacturing method according to an embodiment of the present disclosure.

Referring to Fig. 2, the manufacturing method (S1000) of the electrode assembly 100 according to the present embodiment may comprise:
a step of preparing the separator (S1100), a step of comparing the surface roughness values of the separator and the mandrel (S1200), a step of adjusting the surface roughness of the mandrel based on the compared value (S1300), and a step of winding a sheet-like laminate including a separator and an electrode using the mandrel (S1400).

Next, before specifically describing the method of manufacturing the jelly-roll type electrode assembly according to an embodiment of the present disclosure, a mandrel that can be used in the present manufacturing method will be described.

Referring to Figs. 3 and 4 , the mandrel 200 may have a long rod shape. The cross section of the mandrel 200 may have a circular shape as a whole. One end of the mandrel 200 may be separated based on the central axis, and the cross section of the separated portions can have a semicircular shape. The separated portions may be referred to as a first part 210a and a second part 210b, respectively. A sheet-like laminate may be inserted between the first part 210a and the second part 210b facing each other in the mandrel 200, and the sheet-like laminate may be wound along the outer surface 220 of the mandrel 200 as the mandrel 200 rotates in one direction. Through the rotation of the mandrel 200, the sheet-like laminate can be wound in a jelly-roll type. In the jelly-roll type electrode assembly 100, the mandrel 200 may be located on the core 100a. When the winding process is completed, the mandrel 200 located in the core 100a may be removed from the jelly-roll type electrode assembly 100.

During the process of removing the mandrel 200, the mandrel 200 may not be discharged due to the frictional force between the separator 130 and the mandrel 200 located in the innermost layer of the electrode assembly 100. Further, the separator 130 can be damaged by the frictional force between the separator 130 and the mandrel 200, or the separator 130 can be pulled out of the electrode assembly 100, thereby reducing the production efficiency, which may cause problems such as the reduction of the safety of the secondary battery, including disconnection and an internal short circuit of the electrodes 110 and 120. Therefore, in order to minimize this phenomenon, a flat part 230 extending in the longitudinal direction may be formed on a part of the outer surface 220 of the mandrel 200. By forming the flat part 230, the contact surface between the mandrel 200 and the separator 130 can be minimized, whereby the problems that may occur during removal of the mandrel can be minimized. The length t1 of the flat part 230 may correspond to the length of the sheet-like laminate, specifically, the length of the core 100a.

The interval between the first part 210a and the second part 210b into which the sheet-like laminate is inserted may be larger than the thickness of the sheet-like laminate. If the interval between the first part 210a and the second part 210b is similar to the thickness of the sheet-like laminate, the mandrel 200 and the sheet-like laminate can be fixed satisfactorily, but there is a possibility that a part of the sheet-like laminate will become damaged during the process of removing the mandrel 200. The separation space between the first part 210a and the second part 210b (i.e., the size g1 of the slit) fixes between the mandrel 200 and the sheet-like laminate, but needs to be designed so as to minimize the contact between the core 200 and the sheet-like laminate. The conventional slit size g1 was designed to be around 0.8 mm, but in the present embodiment to which the double-sided SRS separator is applied, the slit size g1 may be preferably 0.8 mm or more. The slit size g1 of the present embodiment may be preferably designed at a level of 0.8 to 1.2 mm.

The separator 130 may be provided as a double-sided SRS separator (S1100). A coating material is applied to both surfaces of the separator 130 to form a coating layer. The coating material includes a first alumina and a second alumina, wherein the ratio of the second alumina may be 40% or less. "Providing the separator 130" described in the step (S1100) may be interpreted as including both those in which separator 130 is manufactured and those in which the manufactured separator is input into the present manufacturing process.

The provided separator 130 may be alternately stacked with the cathode 110 and the anode 120 to form a sheet-like laminate. The sheet-like laminate may be wound by the mandrel 200 and manufactured into a jelly-roll-type electrode assembly 100.

Prior to the winding step of the jelly-roll type electrode assembly 100, the frictional force between the separator 130 and the mandrel 200 needs to be adjusted in order to prevent damage to the separator 130 and the tail out condition. For this purpose, the manufacturing process of the present embodiment includes a step of calculating a difference value between the surface roughness of the separator 130 and the surface roughness of the mandrel 200. Here, the surface roughness of the mandrel 200 may mean the surface roughness of the outer surface 220.

By comparing the surface roughness of the separator 130 and the surface roughness of the mandrel 200, the difference between the two values may be calculated (S1200). The comparison of the surface roughness and the calculation of the difference value can be performed by a control unit or a server of the device for performing the present manufacturing method. The surface roughness of the separator 130 and the surface roughness of the mandrel 200 can be measured, respectively, or can be obtained from a supplier of the separator 130 or the mandrel 200. Here, the measurement of surface roughness can be performed by a non-contact or contact-type roughness tester. As an example, it can be measured by an SJ-410 roughness tester available from Mitutoyo. When the surface roughness values of the separator 130 and the mandrel 200 are measured or acquired, the control unit or the server can compare the measured or acquired surface roughness values and calculate the difference value.

Based on the calculated difference value, the surface roughness of the mandrel 200 can be adjusted (S1300). Usually, in order to improve the surface roughness of the workpiece, i.e., the friction force, prevention of frictional resistance due to the contact area, prevention of groove/dent due to surface roughness, prevention of groove/dent due to hardness difference, prevention of adhesion due to surface treatment, or the like must be achieved.

In order to improve the surface roughness of the mandrel 200 as in the present embodiment, the surface is polished by sand blasting, lapping or the like, whereby a polishing process that minimizes frictional resistance and prevents groove/dent can be appropriately performed. Further, if an additional surface treatment is required, a surface treatment method such as DLC (Diamond Like Carbon) or CrN (Chrome Nitrate), which prevents adhesion by coating the surface, can also be utilized. Here, since the surface roughness of the mandrel 200 is for improving the frictional force with the separator 130, different processes can be applied based on the difference value between the surface roughness of the mandrel 200 and the surface roughness of the separator 130.

Table 1 below shows the degree of polishing of the sand blasting process and the lapping process, and Table 2 below shows the machining level according to the polishing symbol. Here, Rmax means the maximum height of the surface roughness, Rz means the average roughness of 10 points, and Ra may mean the average roughness of the center line.

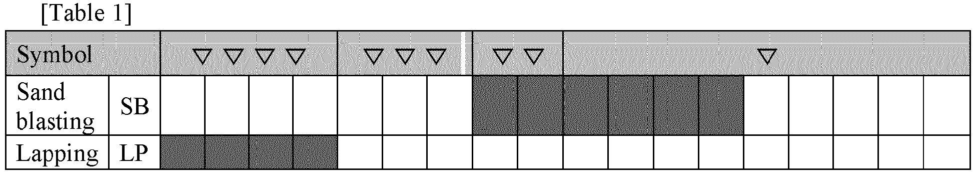

**[Table 2]**

| **Surface machining division value** | | | | |
|---|---|---|---|---|
| **Polishing symbol** | **Name** | **Rmax** | **Rz** | **Ra** |
| ∇ ∇ ∇ ∇ | **Precision polishing** | **0.8s** | **0.8z** | **0.2a** |
| ∇ ∇ ∇ | **Top polishing** | **6.3s** | **6.3z** | **1.6a** |
| ∇ ∇ | **Bottom polishing** | **25s** | **25z** | **6.3a** |
| ∇ | **Rough polishing** | **100s** | **25z** | |
| ~ | **No special provisions** | | | |

The sand blasting process may be a process of polishing the surface of a workpiece by spraying fine particles of various materials onto the surface of the workpiece using high-pressure air or a high-speed rotating impeller. Uniform unevenness can be formed on the surface of the workpiece by the sand blasting process, and foreign matter remaining on the surface after machining can be removed. Here, the size of the particles used in the sand blasting process may be 120 to 150 mesh level. The 150 mesh may mean 106um level.

The lapping process may be a precision machining method in which a workpiece is polished by abrasion and grinding action using a tool called a lap and a lapping material. The lapping process removes protrusion portions on the surface of the workpiece by putting a lap to the workpiece and applying a moderate pressure to the workpiece to operate it, so that the surface precision is improved, and the contact degree of the contact surface can be increased. When the surface treatment of the mandrel 200 is performed by the lapping process, the surface roughness may be 0.15 s to 0.25 s (Rmax), preferably 0.2 s (Rmax) level. As the surface roughness of the mandrel 200 is improved through the lapping process, it is possible to prevent the separator 130 from being damaged during removal of the mandrel 200.

Referring to Table 1 and Table 2, it can be seen that the polishing level of the lapping process is higher than the polishing level of the sand blasting process. Therefore, when the difference of surface roughness between the mandrel 200 and the separator 130 is large based on a specific reference value, a lapping process can be applied to improve the surface roughness of the mandrel 200. When the difference in surface roughness is not large, a sand blasting process is applied to improve the surface roughness of the mandrel 200.

The difference of surface roughness between the mandrel 200 and the separator 130 can be compared based on a predetermined value. When the difference in surface roughness is less than a predetermined value, the surface roughness of the mandrel 200 and the surface roughness of the separator 130 are similar, and when the difference is equal to or larger than a predetermined value, it may be interpreted that the difference between the surface roughness of the mandrel 200 and the surface roughness of the separator 130 is large.

Therefore, based on the calculated difference value, the step of adjusting the surface roughness of the mandrel 200 (S1300) may include a step of applying a first process if the difference between the surface roughness of the mandrel 200 and the surface roughness of the separator 130 is less than the first value, and a step of applying a second process if the difference is equal to or larger than the first value. Here, the first value may be 0.05s to 0.15s (Rmax), preferably 0.1s (Rmax). Further, the first process herein may be a sand blasting process, and the second process may be a lapping process.

Meanwhile, the manufacturing method of the present embodiment can be performed by a step (S1400) of winding the sheet-like laminate after the step (S1300) of adjusting the surface roughness described above, but can be repeatedly performed by the steps (S1200) and (S1300) until the difference in surface roughness between the mandrel 200 and the separator 130 is less than the first value. This may be to ensure that by setting the difference in surface roughness between the mandrel 200 and the separator 130 to be equal to or less than the first value, the friction force between the mandrel 200 and the separator 130 is formed at a desired level. The desired surface roughness of the mandrel 200 may be 0.15 s to 0.25 s (Rmax), preferably 0.2s (Rmax) level.

Specifically, when the difference between the surface roughness of the mandrel 200 and the surface roughness of the separator 130 calculated through the step (S1200) is equal to or larger than the first value, a lapping process is applied to the mandrel 200 through the step (S1300).
After that, the manufacturing method according to the present embodiment proceeds back to the step (S1200), and the surface roughness of the mandrel 200 to which the lapping process is applied can be measured. The surface roughness value of the mandrel 200 on which the lapping process has been completed is confirmed through the step (S1200), and the difference value between the surface roughness of the mandrel 200 on which the lapping process has been completed and the surface roughness of the separator 130 can be calculated again. When the calculated difference value is equal to or larger than the first value, the lapping process is applied to the mandrel 200 through the step (S1300), the step (S1200) can be repeated again. When the calculated difference value is less than the first value, a sanding process can be applied to the mandrel 200 through the step (S1300). Subsequently, the manufacturing method according to the present embodiment can proceed to the step (S1400).

After the surface roughness of the mandrel 200 is adjusted, a sheet-like laminate including a separator and an electrode can be wound using the mandrel 200 (S1400). As described above, one end of the mandrel 200 may include a first part 210a and a second part 210b cut along the central axis. When one end of the sheet-like laminate is inserted into a slit between the first part 210a and the second part 210b, and the mandrel 200 rotates in one direction, the sheet-like laminate can be wound along the outer surface 220 of the mandrel 200. At this time, since the separator 130 is in a state where the surface roughness value is adjusted by the ratio of the first alumina and the second alumina, a slip condition and the like can be minimized.

Here, the size (g1) of the slit is fixed between the mandrel 200 and the sheet-like laminate, but needs to be designed so as to minimize the contact between the mandrel 200 and the sheet-like laminate. The size g1 of the slit may be preferably designed at a level of 0.8 mm to 1.2 mm.

Although not shown in the figure, the manufacturing method of the present embodiment may further include a step of removing the mandrel 200 from the j elly-roll type electrode assembly 100. The separator 130 in contact with the mandrel 200 from the inside of the electrode assembly 100 may be in a state where the surface roughness value is adjusted by the ratio of the first alumina and the second alumina. In the above-mentioned manufacturing method, the surface roughness between the mandrel 200 and the separator 130 can be adjusted to a predetermined value or less. Therefore, in the process of discharging the mandrel 200, the separator 130 is pulled out to the outside of the jelly-roll type electrode assembly 100, or damage to the separator 130 can be minimized.

The method for manufacturing a jelly-roll type electrode assembly according to the present embodiment described above can be performed by a device for manufacturing a jelly-roll type electrode assembly. Specifically, the manufacturing device may include a conveying unit that conveys the sheet-like assembly, a winding unit that winds the sheet-like assembly, a measuring unit that measures the surface roughness of the separator 130 or the mandrel 200, a control unit that compares the surface roughness values of the separator 130 or the mandrel 200 and calculates the difference value, and a machining unit that adjusts the surface roughness of the mandrel 200 based on the difference value.

Here, the winding unit may include the above-mentioned mandrel 200. The measuring unit may include a non-contact type or contact type roughness tester for measuring surface roughness. The machining unit may include a sand blasting device used in the sand blasting process and a lapping device used in the lapping process. The control unit can not only compare the measured surface roughness values and calculate a difference value, but also control the overall operation of the manufacturing device described above. For example, the control unit can control the measuring unit so as to measure the surface roughness of the separator 130 or the mandrel 200. In another example, based on the measured value, the control unit can control the operation of the sand blasting device or the lapping device so that the sand blasting process or the lapping process is performed.

Next, the experimental results of jelly-roll type electrode assemblies will be described.

**[Table 3]**

| Item | | Unit | Single-sided SRS | Double-sided SRS | | |
|---|---|---|---|---|---|---|
| Thickness | | µm | 12.9 | 12.6 | 13 | 12.7 |
| basis weight/total weight | | g/m ² | 8.29 | 7.9 | 8.3 | 8.21 |
| first alumina | | wt. % | 100 | 100 | 84 | 76 |
| second alumina | | | - | - | 16 | 24 |
| Roughness (Ra) | Top (distal end) | Nm | 180 | 201 | 550 | 930 |
| | Back (SRS) | | 610 | | | |
| Coefficient of friction (static/kineti c) | Sandin g | *µk* | (PE) 0.44/0.33 | 0.76/0.72 | 0.67/0.67 | 0.67/0.67 |
| | Lappin g | | (SRS) 0.23/0.21 | 0.31/0.28 | 0.27/0.23 | 0.27/0.23 |
| Winding Test Results | | | | | | |
| Slip condition | | | No issue | No issue | No issue | No issue |
| Automatic discharge **mandrel specification (gap=0.12mm, R=0.6mm) lapping process or sand blasting process | | | No issue | No issue (Sanding+ Coating RT5000 criteria) | No issue | No issue |
| Damage to separator | 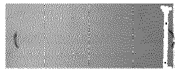 | 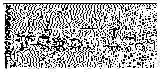 | | 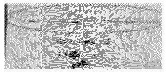 | | 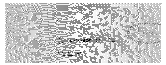 |
| | | | | | | |

Table 3 shows the results of testing whether problems appearing during the winding process are improved depending on the ratio of the first alumina and the second alumina contained in the alumina mixture. In Table 3, it is clarified in advance that in the case of single-sided SRS, alumina having a diameter of 500 nm was used as the second alumina, and in the case of double-sided SRS, alumina having a diameter of 300 nm was used as the second alumina. Further, in the case of embodiments to which a double-sided SRS separator is applied, the step of adjusting the surface roughness of the mandrel can be applied according to the manufacturing method of the above-mentioned embodiment, and thus the difference in surface roughness between the mandrel and the double-sided SRS separator may be less than or equal to the first value.

In the case of a single-sided SRS separator presented as a comparison group, the coating layer is formed on only one surface of the distal end, and thus, the slip condition is less likely to occur than the double-sided SRS separator when winding the sheet-type laminate. Further, in the case of using a single-sided SRS separator, when winding the sheet-type laminate, the mandrel is placed and wound on the surface where the coating layer is not formed, whereby problems such as a tail out condition and a damage to the separator may occur less often than in the case of using a double-sided SRS separator. However, when using a single-sided SRS separator, the coating layer of the separator must be arranged so as to face the electrode, which causes a problem that the time required for the manufacturing process and the number of steps of the manufacturing process are increased.

Looking at the experimental results of the double-sided SRS separator, it was confirmed that in respective embodiments, the slip condition and the mandrel discharge itself did not cause a major problem, but in the embodiments in which the second alumina was contained in a low ratio, a damage to the separator appeared to be greater. This can be interpreted that when the coating layer is formed using only the first alumina having relatively small particles, the difference in surface roughness between the mandrel and the coating layer is large, which causes more damage to the coating layer when discharging the mandrel. Further, the reason why the slip condition does not occur even when the second alumina is contained in the embodiments of Table 3 is that the jelly-roll type electrode assembly 100 of the present embodiments is provided in a slightly large size. For reference, the experiment of Table 3 is a case where the length of the core 100a is about 10 to 12 cm, and the radius of the jelly-roll type electrode assembly 100 is 4 to 5 cm.

Specifically, when only the first alumina is contained in the alumina mixture, the surface roughness of the separator 130 formed thereby may have a large difference from the surface roughness of the mandrel. Therefore, in order to improve this, it is necessary to adjust the surface roughness of the mandrel. In the past, the sanding process and DLC coating process were applied to the mandrel for this purpose, but there was a problem that the mandrel was not discharged (automatic discharge issue), which was thus not suitable for use in the present example.

Therefore, in the present embodiment, in order to improve the surface roughness of the mandrel, a sanding process was applied to the mandrel, and a coating process (RT-5000) was applied. As a result, it was confirmed that the automatic discharge issue was improved as compared to the case of using sand blasting and DLC coating, but the separator 130 was damaged when discharging the mandrel.

When the alumina mixture contains 16wt.% of second alumina, the automatic discharge issue was solved by applying some process to control the surface roughness of the mandrel, but damage to the separator 130 was confirmed as in the above illustration.

However, if the alumina mixture contains 24 wt.% of the second alumina, it was shown that the damage to the separator 130 is slightly improved, and although not specifically described in the table, similar results were obtained even when the second alumina was contained at 40 wt.%.

Referring to the above embodiments, it may be appropriate that the aluminum mixture used for the coating layer of the separator 130 contains 24 wt.% or more of the second alumina. However, in an alumina mixture containing a first alumina and a second alumina, the ratio of the first alumina and the second alumina may need to be appropriately adjusted according to a desired surface roughness and physical/electrochemical properties.

As the ratio of the second alumina increases, the surface roughness is improved, so that the slip condition and the tail out condition or the separator damage phenomenon that occur when discharging the mandrel can be improved, but it is known that as the ratio of the first alumina having small particle diameter increases, the air permeability and adhesion of the coating layer can be improved, whereby the ratio of the second aluminum may be preferably contained within suitable values. For example, the second alumina may be appropriately contained in the alumina mixture in an amount of 40 wt.% or less in the alumina mixture. The second alumina may be appropriately contained in the alumina mixture in an amount of 24 wt % to 40 wt %.

Further, as described above, the appropriate surface roughness value may vary depending on the difference in roughness with the mandrel, the width of the separator 130, or the size of the jelly-roll type electrode assembly 100. When the size of the jelly-roll-type electrode assembly 100 increases, the contact area between the mandrel and the separator 130 increases, and the contact area between the wound separator 130 and the electrodes 110 and 120 also increases, so that the tail out condition or the damage to the separator 130 may appear more frequently.

When the jelly-roll type electrode assembly 100 is formed so as to have a large size or a length of the mandrel 100a, the surface roughness value of the separator 130 is designed to be slightly large, and when the length of the jelly-roll type electrode assembly 100 or the core 100a is formed to be small, the surface roughness value of the separator 130 may be preferably designed to be slightly small. The experiment of Table 3 is a case where the length of the core 100a is about 10 to 12 cm, and the radius of the jelly-roll type electrode assembly 100 is 4 to 5 cm. Therefore, when the size of the j elly-roll type electrode assembly 100 is designed to be smaller than the above, a preferred ratio of the second alumina may be 24 wt.% or less. Specifically, when the second alumina is contained in the alumina mixture at a level of 16 wt.% or at a level of 24 wt.%, the tail out condition or the damage to the separator 130 may not appear when discharging the mandrel, while the slip condition does not appear during winding. Therefore, the second alumina may be preferably contained in the alumina mixture in an amount of 16 wt.% or more. The second alumina may be appropriately contained in the alumina mixture in an amount of 16 wt.% to 24 wt.%. The second alumina may be appropriately contained in the alumina mixture in an amount of 16 wt.% to 40 wt.%.

Further, the surface roughness (Ra) of the double-sided SRS separator is 500 nm to 1 µm, preferably 550 nm to 930 nm.

The surface roughness (Ra, nm) is measured as follows. For example, the prepared specimen is cut into a size of 300 mm × 300 mm to prepare a sample, and the surface roughness tester (SJ-210 model, Mitutoyo) was placed thereon, the built-in tip was set at a speed of 0.5 mm/s to measure the surface roughness, and the Ra (nm) value, which is a parameter of surface roughness, can be expressed numerically.

Meanwhile, the jelly-roll type electrode assembly 100 according to the present embodiment described above may be included in a battery cell. The jelly-roll type electrode assembly 100 is inserted into a cylindrical or prismatic metal container and then filled with an electrolyte to seal a metal container, thereby manufacturing as a battery cell. The battery cell including the jelly-roll type electrode assembly 100 may be a cylindrical battery or a prismatic battery, but the shape of the battery cell including the jelly-roll type electrode assembly 100 is not limited to the above-described examples.

Although the preferred embodiments of the present disclosure has been shown and described above, the scope of the present disclosure is not limited thereto, and numerous changes and modifications can be devised by those skilled in the art using the principles of the invention defined in the appended claims, which also falls within the spirit and scope of the present disclosure.

### [Description of Reference Numerals]

100: electrode assembly
100a: core
110: cathode
120: anode
130: separator
200: mandrel
210a: first part
210b: second part
220: outer surface
230: flat part

## Claims

1. A jelly-roll type electrode assembly (100) in which a sheet-like laminate comprising an electrode and a separator (130) is wound,
wherein the separator (130) includes a double-sided coating layer,
wherein the coating layer includes a mixture of a first alumina and a second alumina, and
wherein the separator (130) has a surface roughness (Ra) of 500 nm to 1 µm, determined by the method specified in the description, and a particle diameter of the first alumina is smaller than a particle diameter of the second alumina.

2. The jelly-roll type electrode assembly (100) according to claim 1, wherein:
the second alumina is contained in an amount of 16 to 40 parts by weight based on 100 parts by weight of the mixture.

3. The jelly-roll type electrode assembly (100) according to claim 2, wherein:
the first alumina is contained in an amount of 60 to 84 parts by weight based on 100 parts by weight of the mixture.

4. The jelly-roll type electrode assembly (100) according to claim 1, wherein:
the first alumina has a particle diameter of 20 to 50 nm.

5. The jelly-roll type electrode assembly (100) according to claim 1, wherein:
the second alumina has a particle diameter of 300 to 500 nm.

6. The jelly-roll type electrode assembly (100) according to claim 1, wherein:
the electrode assembly (100) is a double-sided SRS laminate in which a separator(130), a cathode (110), a separator (130) and an anode are stacked in order.

7. The jelly-roll type electrode assembly (100) according to claim 1, wherein:
the jelly-roll type electrode assembly (100) has a core length of about 10 cm to 12 cm and a radius of about 4 cm to 5 cm.

8. A method of manufacturing a jelly-roll type electrode assembly (100), the method comprising the steps of:
providing a separator (130) containing a double-sided coating layer,
calculating a difference value between a surface roughness of the separator (130) and a surface roughness of a mandrel (200),
adjusting the surface roughness of the mandrel (200)using a first process if the difference value between the surface roughness of the separator (130) and the surface roughness of the mandrel (200) is less than a first value,
adjusting the surface roughness of the mandrel (200) using a second process if the difference value between the surface roughness of the separator (130) and the surface roughness of the mandrel (200) is equal to or larger than the first value, and
winding a sheet-like laminate comprising an electrode and the separator (130) using the mandrel (200) whose surface roughness has been adjusted,
wherein the coating layer includes a mixture of a first alumina and a second alumina, and
wherein the separator (130) has a surface roughness (Ra) of 500 nm to 1 µm, and the particle diameter of the first alumina is smaller than the particle diameter of the second alumina;
wherein the first process is a sand blasting process; and
wherein the second process is a lapping process.

9. The method of manufacturing a jelly-roll type electrode assembly (100) according to claim 8, wherein:
the second alumina is contained in an amount of 16 to 40 parts by weight based on 100 parts by weight of the mixture.

10. The method of manufacturing a jelly-roll type electrode assembly (100) according to claim 9, wherein:
the first alumina is contained in an amount of 60 to 84 parts by weight based on 100 parts by weight of the mixture.

11. The method of manufacturing a jelly-roll type electrode assembly (100) according to claim 8, wherein:
the first value (Rmax) is between 0.05 µm and 0.15µm.

12. The method of manufacturing a jelly-roll type electrode assembly (100) according to claim 8, wherein:
the sheet-like laminate is wound by a rod-shaped mandrel (200),
the mandrel (200) includes a first part (210a) and a second part (210b) that are separated around a rotation axis,
one end of the sheet-like laminate is fixed by being inserted into a slit between the first part (210a) and the second part (210b), and
the size of the slit is larger than 0.8 mm.

13. The method of manufacturing a jelly-roll type electrode assembly (100) according to claim 8, wherein:
the sheet-like laminate is wound by a rod-shaped mandrel (200),
the surface roughness of the mandrel (200) is less than or equal to the second value, and
the second value (Rmax) is 0.15 µm to 0.25 µm.

14. The method of manufacturing a jelly-roll type electrode assembly (100) according to claim 8, wherein:
when the second process is used in the step of adjusting the surface roughness of the mandrel (200), the step of calculating the difference value between the surface roughness of the separator (130) and the surface roughness of the mandrel (200) is performed again.

15. The method of manufacturing a jelly-roll type electrode assembly (100) according to claim 14, wherein:
when the difference value of the surface roughness calculated in the step of calculating the difference value between the surface roughness of the separator (130) and the surface roughness of the mandrel (200) that is performed again is equal to or larger than a first value, the step of adjusting the surface roughness of the mandrel (200) using a second process is performed.

16. The method of manufacturing a jelly-roll type electrode assembly (100) according to claim 14, wherein:
when the difference value of the surface roughness calculated in the step of calculating the difference value between the surface roughness of the separator (130) and the surface roughness of the mandrel (200) that is performed again is less than or equal to a first value, the step of adjusting the surface roughness of the mandrel (200) using a first process is performed, and
the step of winding a sheet-like laminate comprising the electrode and the separator (130) using the mandrel (200) whose surface roughness has been adjusted is performed.

17. A battery cell comprising the jelly-roll type electrode assembly (100) according to claim 1.

## Patentansprüche

1. Jelly-Roll-Elektrodenanordnung (100), in der ein lagenartiges Laminat, das eine Elektrode und einen Separator (130) umfasst, gewickelt ist,
wobei der Separator (130) eine doppelseitige Beschichtungsschicht umfasst,
wobei die Beschichtungsschicht eine Mischung aus einem ersten Aluminiumoxid und einem zweiten Aluminiumoxid umfasst, und
wobei der Separator (130) eine Oberflächenrauheit (Ra) von 500 nm bis 1 µm aufweist, die durch das in der Beschreibung angegebene Verfahren bestimmt wird, und ein Partikeldurchmesser des ersten Aluminiumoxids kleiner als ein Partikeldurchmesser des zweiten Aluminiumoxids ist.

2. Jelly-Roll-Elektrodenanordnung (100) nach Anspruch 1, wobei:
das zweite Aluminiumoxid in einer Menge von 16 bis 40 Gewichtsteilen, bezogen auf 100 Gewichtsteile der Mischung, enthalten ist.

3. Jelly-Roll-Elektrodenanordnung (100) nach Anspruch 2, wobei:
das erste Aluminiumoxid in einer Menge von 60 bis 84 Gewichtsteilen, bezogen auf 100 Gewichtsteile der Mischung, enthalten ist.

4. Jelly-Roll-Elektrodenanordnung (100) nach Anspruch 1, wobei:
das erste Aluminiumoxid einen Partikeldurchmesser von 20 bis 50 nm aufweist.

5. Jelly-Roll-Elektrodenanordnung (100) nach Anspruch 1, wobei:
das zweite Aluminiumoxid einen Partikeldurchmesser von 300 bis 500 nm aufweist.

6. Jelly-Roll-Elektrodenanordnung (100) nach Anspruch 1, wobei:
die Elektrodenanordnung (100) ein doppelseitiges SRS-Laminat ist, in dem ein Separator (130), eine Kathode (110), ein Separator (130) und eine Anode in der Reihenfolge gestapelt sind.

7. Jelly-Roll-Elektrodenanordnung (100) nach Anspruch 1, wobei:
die Jelly-Roll-Elektrodenanordnung (100) eine Kernlänge von etwa 10 cm bis 12 cm und einen Radius von etwa 4 cm bis 5 cm aufweist.

8. Verfahren zum Herstellen einer Jelly-Roll-Elektrodenanordnung (100), wobei das Verfahren die folgenden Schritte umfasst:
Bereitstellen eines Separators (130), der eine doppelseitige Beschichtungsschicht enthält,
Berechnen eines Differenzwerts zwischen einer Oberflächenrauheit des Separators (130) und einer Oberflächenrauheit eines Dorns (200),
Einstellen der Oberflächenrauheit des Dorns (200) unter Verwendung eines ersten Prozesses, wenn der Differenzwert zwischen der Oberflächenrauheit des Separators (130) und der Oberflächenrauheit des Dorns (200) kleiner als ein erster Wert ist,
Einstellen der Oberflächenrauheit des Dorns (200) unter Verwendung eines zweiten Prozesses, wenn der Differenzwert zwischen der Oberflächenrauheit des Separators (130) und der Oberflächenrauheit des Dorns (200) gleich oder größer als der erste Wert ist, und
Wickeln eines lagenartigen Laminats, das eine Elektrode und den Separator (130) umfasst, unter Verwendung des Dorns (200), dessen Oberflächenrauheit eingestellt wurde,
wobei die Beschichtungsschicht eine Mischung aus einem ersten Aluminiumoxid und einem zweiten Aluminiumoxid umfasst, und
wobei der Separator (130) eine Oberflächenrauheit (Ra) von 500 nm bis 1 µm aufweist und der Partikeldurchmesser des ersten Aluminiumoxids kleiner als der Partikeldurchmesser des zweiten Aluminiumoxids ist;
wobei der erste Prozess ein Sandstrahlprozess ist; und
wobei der zweite Prozess ein Läppprozess ist.

9. Verfahren zum Herstellen einer Jelly-Roll-Elektrodenanordnung (100) nach Anspruch 8, wobei:
das zweite Aluminiumoxid in einer Menge von 16 bis 40 Gewichtsteilen, bezogen auf 100 Gewichtsteile der Mischung, enthalten ist.

10. Verfahren zum Herstellen einer Jelly-Roll-Elektrodenanordnung (100) nach Anspruch 9, wobei:
das erste Aluminiumoxid in einer Menge von 60 bis 84 Gewichtsteilen, bezogen auf 100 Gewichtsteile der Mischung, enthalten ist.

11. Verfahren zum Herstellen einer Jelly-Roll-Elektrodenanordnung (100) nach Anspruch 8, wobei:
der erste Wert (Rmax) zwischen 0,05 µm und 0,15 µm liegt.

12. Verfahren zum Herstellen einer Jelly-Roll-Elektrodenanordnung (100) nach Anspruch 8, wobei:
das lagenartige Laminat durch einen stabförmigen Dorn (200) gewickelt wird,
der Dorn (200) einen ersten Teil (210a) und einen zweiten Teil (210b) umfasst, die um eine Drehachse getrennt sind,
ein Ende des lagenartigen Laminats fixiert wird, indem es in einen Schlitz zwischen dem ersten Teil (210a) dem zweiten Teil (210b) eingeführt wird, und
die Größe des Schlitzes größer als 0,8 mm ist.

13. Verfahren zum Herstellen einer Jelly-Roll-Elektrodenanordnung (100) nach Anspruch 8, wobei:
das lagenartige Laminat durch einen stabförmigen Dorn (200) gewickelt wird,
die Oberflächenrauheit des Dorns (200) kleiner oder gleich dem zweiten Wert ist, und
der zweite Wert (Rmax) 0,15 µm bis 0,25 µm beträgt.

14. Verfahren zum Herstellen einer Jelly-Roll-Elektrodenanordnung (100) nach Anspruch 8, wobei:
wenn der zweite Prozess in dem Schritt des Einstellens der Oberflächenrauheit des Dorns (200) verwendet wird, der Schritt des Berechnens des Differenzwerts zwischen der Oberflächenrauheit des Separators (130) und der Oberflächenrauheit des Dorns (200) erneut durchgeführt wird.

15. Verfahren zum Herstellen einer Jelly-Roll-Elektrodenanordnung (100) nach Anspruch 14, wobei:
wenn der Differenzwert der Oberflächenrauheit, der in dem Schritt des Berechnens des Differenzwerts zwischen der Oberflächenrauheit des Separators (130) und der Oberflächenrauheit des Dorns (200), der erneut durchgeführt wird, berechnet wird, gleich oder größer als ein erster Wert ist, der Schritt des Einstellens der Oberflächenrauheit des Dorns (200) unter Verwendung eines zweiten Prozesses durchgeführt wird.

16. Verfahren zum Herstellen einer Jelly-Roll-Elektrodenanordnung (100) nach Anspruch 14, wobei:
wenn der Differenzwert der Oberflächenrauheit, der in dem Schritt des Berechnens des Differenzwerts zwischen der Oberflächenrauheit des Separators (130) und der Oberflächenrauheit des Dorns (200), der erneut durchgeführt wird, berechnet wird, kleiner oder gleich einem ersten Wert ist, der Schritt des Einstellens der Oberflächenrauheit des Dorns (200) unter Verwendung eines ersten Prozesses durchgeführt wird, und
der Schritt des Wickelns eines lagenartigen Laminats, das die Elektrode und den Separator (130) umfasst, unter Verwendung des Dorns (200), dessen Oberflächenrauheit eingestellt wurde, durchgeführt wird.

17. Batteriezelle, umfassend die Jelly-Roll-Elektrodenanordnung (100) nach Anspruch 1.

## Revendications

1. Ensemble d'électrodes de type jelly-roll (100) dans lequel un stratifié en feuille composé d'une électrode et d'un séparateur (130) est enroulé,
le séparateur (130) comprenant une couche de revêtement double face,
la couche de revêtement comprenant un mélange d'une première alumine et d'une deuxième alumine, et
le séparateur (130) présentant une rugosité de surface (Ra) de 500 nm à 1 µm, déterminée par le procédé spécifié dans la description, et un diamètre particulaire de la première alumine étant inférieur à un diamètre particulaire de la deuxième alumine.

2. Ensemble d'électrodes de type jelly-roll (100) selon la revendication 1,
la deuxième alumine étant présente dans une quantité allant de 16 à 40 parties en poids sur la base de 100 parties en poids du mélange.

3. Ensemble d'électrodes de type jelly-roll (100) selon la revendication 2,
la première alumine étant présente dans une quantité allant de 60 à 84 parties en poids sur la base de 100 parties en poids du mélange.

4. Ensemble d'électrodes de type jelly-roll (100) selon la revendication 1,
le diamètre particulaire de la première alumine mesurant de 20 à 50 nm.

5. Ensemble d'électrodes de type jelly-roll (100) selon la revendication 1,
le diamètre particulaire de la deuxième alumine mesurant de 300 à 500 nm.

6. Ensemble d'électrodes de type jelly-roll (100) selon la revendication 1,
l'ensemble d'électrodes (100) étant un stratifié SRS double face dans lequel un séparateur (130), une cathode (110), un séparateur (130) et une anode sont empilés dans l'ordre.

7. Ensemble d'électrodes de type jelly-roll (100) selon la revendication 1,
la longueur de noyau de l'ensemble d'électrodes de type jelly-roll (100) mesurant environ 10 cm à 12 cm et son rayon environ 4 cm à 5 cm.

8. Procédé de fabrication d'un ensemble d'électrodes de type jelly-roll (100), le procédé comprenant les étapes suivantes :
agencement d'un séparateur (130) contenant une couche de revêtement double face,
calcul d'une valeur de différence entre une rugosité de surface du séparateur (130) et une rugosité de surface d'un mandrin (200),
ajustement de la rugosité de surface du mandrin (200) en utilisant un premier procédé si la valeur de différence entre la rugosité de surface du séparateur (130) et la rugosité de surface du mandrin (200) est inférieure à une première valeur,
ajustement de la rugosité de surface du mandrin (200) en utilisant un deuxième procédé si la valeur de différence entre la rugosité de surface du séparateur (130) et la rugosité de surface du mandrin (200) est égale ou supérieure à la première valeur, et
enroulement d'un stratifié en feuille comprenant une électrode et le séparateur (130) en utilisant le mandrin (200) dont la rugosité de surface a été ajustée,
la couche de revêtement comprenant un mélange d'une première alumine et d'une deuxième alumine, et
le séparateur (130) présentant une rugosité de surface (Ra) de 500 nm à 1 µm, et le diamètre particulaire de la première alumine étant inférieur au diamètre particulaire de la deuxième alumine;
le premier procédé étant un procédé de sablage ;
le deuxième procédé étant un processus de rodage.

9. Procédé de fabrication d'un ensemble d'électrodes de type jelly-roll (100) selon la revendication 8,
la deuxième alumine étant présente dans une quantité allant de 16 à 40 parties en poids sur la base de 100 parties en poids du mélange.

10. Procédé de fabrication d'un ensemble d'électrode de type jelly-roll (100) selon la revendication 9,
la première alumine étant présente dans une quantité allant de 60 à 84 parties en poids sur la base de 100 parties en poids du mélange.

11. Procédé de fabrication d'un ensemble d'électrodes de type jelly-roll (100) selon la revendication 8,
la première valeur (Rmax) étant comprise entre 0,05µm et 0,15µm.

12. Procédé de fabrication d'un ensemble d'électrodes de type jelly-roll (100) selon la revendication 8,
le stratifié en forme de feuille étant enroulé par un mandrin en forme de barre (200),
le mandrin (200) comprenant une première partie (210a) et une deuxième partie (210b) séparées autour d'un axe de rotation,
un bout du stratifié en feuille étant fixé par son insertion dans une fente entre la première partie (210a) et la deuxième partie (210b), et
la taille de la fente étant supérieure à 0,8 mm.

13. Procédé de fabrication d'un ensemble d'électrodes de type jelly-roll (100) selon la revendication 8,
le stratifié en forme de feuille étant enroulé par un mandrin en forme de barre (200),
la rugosité de surface du mandrin (200) étant inférieure ou égale à la deuxième valeur, et
la deuxième valeur (Rmax) étant comprise entre 0,15 µm et 0,25 µm.

14. Procédé de fabrication d'un ensemble d'électrodes de type jelly-roll (100) selon la revendication 8, dans lequel
lorsque l'on utilise le deuxième procédé à l'étape d'ajustement de la rugosité de surface du mandrin (200), l'étape du calcul de la valeur de différence entre la rugosité de surface du séparateur (130) et la rugosité de surface du mandrin (200) est effectuée une nouvelle fois.

15. Procédé de fabrication d'un ensemble d'électrode de type jelly-roll (100) selon la revendication 14, dans lequel
lorsque la valeur de différence de la rugosité de surface calculée à l'étape de calcul de la valeur de différence entre la rugosité de surface du séparateur (130) et la rugosité de surface du mandrin (200), qui est effectuée une nouvelle fois, est égale ou supérieure à une première valeur, l'étape d'ajustement de la rugosité de surface du mandrin (200) en utilisant un deuxième procédé est effectuée.

16. Procédé de fabrication d'un ensemble d'électrode de type jelly-roll (100) selon la revendication 14, dans lequel
lorsque la valeur de différence de la rugosité de surface calculée à l'étape du calcul de la valeur de différence entre la rugosité de surface du séparateur (130) et la rugosité de surface du mandrin (200), qui est effectuée une nouvelle fois, est inférieure ou égale à une première valeur, l'étape d'ajustement de la rugosité de surface du mandrin (200) en utilisant un premier procédé est effectuée, et
l'étape d'enroulement d'un stratifié en feuille comprenant l'électrode et le séparateur (130) à l'aide du mandrin (200), dont la rugosité de surface a été ajustée, est effectuée.

17. Cellule de batterie comprenant l'ensemble d'électrodes de type jelly-roll (100) selon la revendication 1.
